# EUROPÄISCHE PATENTSCHRIFT

(11) **EP 2 474 449 B1**
(45) Veröffentlichungstag und Bekanntmachung des Hinweises auf die Patenterteilung: **30.03.2016**
(21) Anmeldenummer: 11150444.5
(22) Anmeldetag: 10.01.2011
(51) Int. Cl.: B60R 1/04

(54) **Innenrückblickspiegelanordnung für Kraftfahrzeuge**
Inner rear view mirror for motor vehicles
Agencement de rétroviseur intérieur pour véhicules automobiles

(43) Veröffentlichungstag der Anmeldung: 11.07.2012
(73) Patentinhaber: SMR Patents S.à.r.l., 1653 Luxembourg (LU)
(72) Erfinder: Liesener, Alf, 73614 Schorndorf (DE); Wittmann, Lutz, 70771 Leinfelden-Echterdingen (DE); Arnold, Dieter, 71111 Waldenbuch (DE)
(74) Vertreter: Weber-Bruls, Dorothée

(56) Entgegenhaltungen:
- WO-A1-02/18174
- DE-A1- 3 221 612
- DE-U1- 29 513 369
- DE-U1- 29 914 501
- US-A1- 2007 265 755

## Beschreibung

Die Erfindung betrifft eine Innenrückblickspiegelanordnung für Kraftfahrzeuge gemäß dem Oberbegriff des Anspruchs 1.

Eine Innenrückblickspiegelanordnung für ein Kraftfahrzeug besteht beispielsweise aus einem an einer Konsole am Dachhimmel im Kraftfahrzeuginnenraum oder an der Innenseite der Windschutzscheibe z.B. an deren oberem Rand angeordneten Spiegelfuß, welcher mittels einer ein- oder mehrteiligen Spiegelfußabdeckung verkleidet sein kann, und einem an dem Spiegelfuß angeordneten, auch als Spiegelkopf bezeichneten Innenrückblickspiegel mit einem Spiegelglas. Der Innenrückblickspiegel kann ein ein- oder mehrteiliges Innendruckblickspiegelgehäuse umfassen, welches unter anderem einen dem Spiegelfuß zugeordneten Grundträger beherbergen, einen solchen umfassen, oder von einem solchen umfasst werden kann.

Das Innenrückblickspiegelgehäuse weist auf seiner der Fahrtrichtung des Kraftfahrzeugs abund dem Fahrer des Kraftfahrzeugs zugewandten Vorderseite eine Öffnung auf, durch welche hindurch das Spiegelglas sichtbar ist bzw. in welcher das Spiegelglas angeordnet ist. Das Innenrückblickspiegelgehäuse umgreift hierbei das Spiegelglas an dessen Rändern zumindest zum Teil derart, dass z.B. die Einhaltung gesetzlicher Vorgaben bezüglich vorgeschriebener Mindestradien an exponierten, Personen im Kraftfahrzeuginnenraum zugänglichen Stellen sichergestellt ist.

Spiegelfuß und Grundträger sind beispielsweise vermittels eines Kugelgelenks gelenkig miteinander verbunden, so dass der Innenrückblickspiegel mit dem Spiegelglas in einer gewünschten, vom Fahrer des Kraftfahrzeugs individuell einstellbaren Verstelllage gegenüber dem Spiegelfuß einstellbar ist.

Um beispielsweise unerwünschte Bewegungen des Spiegelglases zu verhindern oder zumindest zu unterdrücken, wie etwa unerwünschtes Flattern während der Fahrt des Kraftfahrzeugs, kann die gelenkige Verbindung z.B. ein Reiblager umfassen oder als ein solches ausgeführt sein, so dass der Spiegelkopf bzw. der Innenrückblickspiegel in der gewünschten, vom Fahrer des Kraftfahrzeugs individuell einstellbaren Verstelllage gegenüber dem Spiegelfuß gehalten wird, ohne jedoch die Verstellbarkeit grundsätzlich einzuschränken. Ein solches Reiblager besteht aus zumindest paarweise relativ zueinander beweglichen, miteinander zur Anlage kommenden Führungsflächen. Je Paar Führungsflächen ist dabei eine erste Führungsfläche an einem ersten Bauteil der in jeder Verstelllage relativ zueinander zu klemmenden Bauteile angeordnet, und eine mit der ersten Führungsfläche zur Anlage kommende zweite Führungsfläche an dem anderen Bauteil. Die Klemmung erfolgt durch Reibungskräfte zwischen den wenigstens zwei miteinander zur Anlage kommenden Führungsflächen.

Die gelenkige Verbindung kann alternativ oder zusätzlich einen elektromotorischen Verstellantrieb umfassen, der eine elektromotorische Verstellung der Verstelllage des Innenrückblickspiegels zulässt. In Verbindung z.B. mit einem Speicher für mindestens eine individuelle Verstelllage kann eine solche durch Abrufen des Speichers wiederholbar genau eingestellt werden.

Die gelenkige Verbindung kann ferner einen Abklappmechanismus umfassen, vermittels dem der Spiegelkopf bzw. der Innenrückblickspiegel durch Betätigung einer Bedieneinrichtung um einen definierten Schwenkwinkel aus einer Betriebsstellung um eine im Wesentlichen horizontale Achse in eine Abklappstellung und umgekehrt verschwenkt werden kann, um eine Blendung durch rückwärtige Lichtquellen in der Abklappstellung abzumindern. Eine Innenrückblickspiegelanordnung nach dem Oberbegriff von Anspruch 1, mit einem derartigen Abklappmechanismus ist beispielsweise durch DE 299 14 501 U1 bekannt.

Ferner offenbart die US 2007/0265755 A1 eine gattungsgemäße Innenrückspiegelanordnung in Form eines Befestigungssystems zur Befestigung einer Vielzahl von Zubehörteilen an einer Windschutzscheibe eines Kraftfahrzeugs.

Eine weitere Innenrückspiegelanordnung ist aus der WO 02/18174 A1 bekannt, die die Anordnung des Spiegels als in einem Standfuß anordbare und wieder aus diesem entnehmbare Einheit vorschlägt.

Zur Vermeidung einer Blendung durch rückwärtige Lichtquellen ist sowohl alternativ als auch zusätzlich bekannt, eine elektrochromatische Abblendung des Spiegelglases vorzusehen.

Ein hierfür erforderliches elektrochromatisch abblendbares Spiegelglas sowie eine Steuerschaltung für das elektrochromatisch abblendbare Spiegelglas stellen zwei Beispiele einer Vielzahl von elektrische Komponenten einer Innenrückblickspiegelanordnung dar, welche einzeln oder in Kombination mit anderen elektrischen Komponenten im Innenrückblickspiegelgehäuse beherbergt sein können.

Beispiele für alternativ oder zusätzlich zu einem elektrochromatischen Spiegelglas im Innenrückblickspiegelgehäuse beherbergte elektrische Komponenten sind wenigstens ein Leuchtmittel einer ambienten, bei Dunkelheit während der Fahrt ständig eingeschalteten Innenraumbeleuchtung, wenigstens ein Leuchtmittel einer bei geöffneter Tür oder gesondert eingeschalteten Innenraumbeleuchtung, wobei sowohl das Leuchtmittel der Innenraumbeleuchtung, als auch das der ambienten Innenraumbeleuchtung insbesondere bei sehr flacher bzw. weit über den Fahrzeuginnenraum reichender Windschutzscheibe bzw. A-Säule im Spiegelkopf bzw. Innenrückblickspiegel integriert sein kann, wenigstens ein Leuchtmittel einer Lesebeleuchtung, zumindest ein Temperatur- und/oder Feuchtigkeitssensor zur Regelung der Klimatisierung der Kraftfahrzeuginnenraums, z.B. zur Regelung beispielsweise eines Abtauvorgangs der Windschutzscheibe, eine Mikrofonanordnung z.B. für eine Sprachsteuerung und/oder eines im Kraftfahrzeuginnenraum integrierten Telefonsystems, eine Lautsprecheranordnung z.B. ebenfalls eines Telefonsystems und/oder einer Kraftfahrzeuginnenraumbeschallung.

Ein wesentlicher Nachteil der bekannten Innenrückblickspiegelanordnungen ergibt sich durch die komplizierte elektrische Verbindung der einzelnen elektrischen Komponenten z.B. mit einem Bussystem des Kraftfahrzeugs über die gelenkige Verbindung zwischen Spiegelfuß und Spiegelkopf bzw. Innenrückblickspiegel hinweg.

Weitere Nachteile ergeben sich z.B. bei einer im Spiegelkopf bzw. Innenrückblickspiegel untergebrachten Innenraumbeleuchtung und/oder ambienten Innenraumbeleuchtung durch eine Ausleuchtung unterschiedlicher Bereiche des Kraftfahrzeuginnenraums in Abhängigkeit von der Verstelllage des Spiegelkopfs bzw. Innenrückblickspiegels.

Neben einer Einschränkung gestalterischer Freiheitsgrade für den Spiegelkopf bzw. den Innenrückblickspiegel der Innenrückblickspiegelanordnung ergibt sich ein weiterer Nachteil durch eine erhebliche Einschränkung des Fahrzeuginnenraums durch den von dem Spiegelkopfbzw. Innenrückblickspiegel benötigten, eingenommenen Bauraum. Dadurch ist auch die Ausgestaltung des Innenspiegels betroffen, die im Stand der Technik durch blockige, tiefe Spiegelköpfe auffällt.

Ein zusätzlicher Nachteil der bekannten Innenrückblickspiegelanordnungen ist deren eingeschränkte Flatter- bzw. Vibrationsfestigkeit der Verstelllage des Spiegelkopfes bzw. Innenrückblickspiegels gegenüber dem Spiegelfuß.

Darüber hinaus sind im Spiegelkopf bzw. Innenrückblickspiegel gegebenenfalls untergebrachte Temperatur- und/oder Feuchtigkeitssensoren z.B. für die Regelung eines Abtauvorgangs der Windschutzscheibe nur eingeschränkt zuverlässig.

Außerdem ist es grundsätzlich wünschenswert, sowohl bei Innenrückblickspiegelanordnungen rechts-, als auch linksgelenkter Kraftfahrzeuge identische Bauteile zu verwenden. Das stellt insbesondere dann ein Problem dar, wenn Leuchten im Spiegelkopf eingesetzt sind. Die Ausrichtung der Leuchten ist spezifisch zur Fahrerposition.

Eine Aufgabe der Erfindung ist die Entwicklung einer Innenrückblickspiegelanordnung für Kraftfahrzeuge, welche zumindest einen der genannten Nachteile behebt.

Die Aufgabe wird gelöst mit den Merkmalen des unabhängigen Anspruchs 1. Die Ansprüche 2 bis 12 beschreiben vorteilhafte Weiterbildungen der Erfindung.

Demnach ist eine Innenrückblickspiegelanordnung für Kraftfahrzeuge vorgesehen, welche einen vermittels einer ein- oder mehreiligen Spiegelfußabdeckung zumindest zum Teil verkleideten Spiegelfuß sowie einen daran gelenkig angeordneten Spiegelkopf bzw. Innenrückblickspiegel mit einem Spiegelglas aufweist.

Wenigstens eine elektrische Komponente ist zumindest zum Teil von der Spiegelfußabdeckung beherbergt.

Es ist von Vorteil, wenn möglichst alle elektrischen Baugruppen, die im Stand der Technik im Spiegelkopf aufgenommen sind, im Spiegelfuß des Innenspiegels angeordnet werden.

Erfindungsgemäß ist die wenigstens eine zumindest zum Teil von der Spiegelfußabdeckung beherbergte elektrische Komponente in Blickrichtung zumindest eines Fahrers eines Kraftfahrzeugs hinter dem Spiegelkopf bzw. Innenrückblickspiegel angeordnet. Vorzugsweise befindet sich die wenigstens eine gemeinsam mit dem Spiegelfuß zumindest zum Teil von der Spiegelfußabdeckung beherbergte elektrische Komponente in Blickrichtung eines Beifahrers des Kraftfahrzeugs ebenfalls hinter dem Spiegelkopf bzw. Innenrückblickspiegel. Dies hat eine optimale Raumausnutzung zur Folge verbunden mit einem kleinstmöglichen Bauraumbedarf. Darüber hinaus wird hierdurch größtmögliche Freiheit bei der Gestaltung des Spiegelkopfs bzw. des Innenrückblickspiegels erhalten und ein eleganteres design für den Spiegelkopf wird ermöglicht. Ein weiterer Vorteil ergibt sich durch die - weil hinter dem Spiegelkopf bzw. Innenrückblickspiegel angeordnet - außerhalb des Blickfelds des Fahrers angeordnete, aber bei Bedarf vermittels einfacher Maßnahmen z.B. durch eine Partie der Windschutzscheibe für das menschliche Auge und/oder andersartig optisch sichtbare Anordnung der Spiegelfußabdeckung bzw. zumindest eines Teils der von dieser beherbergten elektrischen Komponenten. Hierdurch können im Gegensatz zu bisherigen Innenrückblickspiegelanordnungen elektrische Komponenten in die Innenrückblickspiegelanordnung integriert werden, welche bislang im Spiegelkopf oder separat im Kraftfahrzeuginnenraum bzw. an der Innenseite der Windschutzscheibe oder am Dachhimmel untergebracht werden mussten. Beispiele für solche nunmehr in die Innenrückblickspiegelanordnung integrierbare elektrische Komponenten sind Kameraanordnungen für Fahrassistenzvorrichtungen bzw. - systeme, Regensensoranordnungen für ein automatisches Wischen der Windschutzscheibe, um nur einige denkbare Ausgestaltungen zu nennen. Ein sich hierdurch ergebender zusätzlicher Vorteil ist, dass durch eine bislang nicht mögliche Konzentration elektrischer Komponenten im Bereich des Spiegelfußes der elektrische Anschluss dieser wesentlich vereinfacht wird, da z.B. weniger separat zu verlegende elektrische Verbindungen benötigt werden.

Neben einer Innenraumbeleuchtung und einer Anzeigeeinrichtung eines Mautsystems kann wenigstens eine der mindestens einen zumindest zum Teil von der Spiegelfußabdeckung beherbergten elektrischen Komponente vorzugsweise aus der Gruppe:
- Regensensoranordnung;
- Antennen, GPS, Mobilfunk, Radar
- ambiente Innenraumbeleuchtung;
- Lesebeleuchtung;
- Sendeeinrichtung für einen elektrischen Torantrieb, wie beispielsweise einen Garagentoröffner;
- Mikrofonanordnung;
- Lautsprecheranordnung;
- Steuerschaltung für elektrochromatisch abblendbares Spiegelglas;
- Temperatur und/oder Feuchtigkeitssensoranordnung, z.B. zur Regelung eines Abtauvorgangs der Windschutzscheibe;
- Kaineraanordnung, z.B. für Fahrerassistenzvorrichtungen und -systeme, wie z.B. zur Spurverlasswarnung, Fahrspurerkennung, Kollisions- bzw. Annäherungswarnung;
- Anzeigeeinrichtung
- Regen-, Temperatur- und Luftfeuchtesensoren
- Schalter
stammen.

Besonders bevorzugt ist der das Spiegelglas umfassende und den Spiegelkopf bildende Innenrückblickspiegel gegebenenfalls wahlweise mit Ausnahme wenigstens einer elektrischen Komponente aus der Gruppe:
- Bedientaster und/oder -schalter und/oder -knopf, z.B. zur Betätigung einer Innenraumbeleuchtung und/oder einer Lesebeleuchtung und/oder zur manuellen Betätigung einer elektrochromatischen Auf- und Abblendung des Spiegelglases etc.;
- Anzeigevorrichtung, vorzugsweise z.B. in das Spiegelglas integriert für eine Informationsanzeige, wie z.B. für eine Kompass- und/oder Warnfunktionsanzeige, etwa für eine Spurverlasswarnung und/oder Totwinkelüberwachung und/oder Kollisions- bzw. Annäherungswarnung;
- elektrochromatisch abblendbares Spiegelglas;
frei von elektrischen Komponenten.

Der Spiegelfuß ist bevorzugt zur Anordnung an der Innenseite einer Windschutzscheibe vorgesehen. Hierdurch wird eine besonders bauraumsparende Anordnung erhalten.

Ebenfalls ist denkbar, dass der Spiegelfuß z.B. von der Windschutzscheibe aus im Wesentlichen horizontal in den Kraftfahrzeuginnenraum kragt. Diese Anordnung eignet sich besonders bei sehr flacher bzw. weit über den Fahrzeuginnenraum reichender Windschutzscheibe bzw. A-Säule. Hierdurch wird der vorhandene Bauraum optimal genutzt, ohne den Kraftfahrzeuginnenraum unnötig einzuschränken.

Auch kann der Spiegelkopf bzw. der Innenrückblickspiegel auf dem Spiegelfuß stehend angeordnet. Dabei ist die Befestigung des Spiegelfußes an einer Konsole am Dachhimmel oder an der Windschutzscheibe derart in Blickrichtung hinter dem Spiegelkopf bzw. Innenrückblickspiegel vorgesehen, dass der Spiegelfuß und die Spiegelfußabdeckung den verbleibenden Raum hinter dem Spiegelkopf bzw. Innenrückblickspiegel einnehmen und so diesen nutzen.

Erfindungsgemäß ist der Spiegelkopf bzw. der Innenrückblickspiegel also dem Spiegelfuß aus einer Blickrichtung eines Fahrers eines Kraftfahrzeugs vorgesetzt, so dass die Spiegelfußabdeckung den verbleibenden Raum hinter dem Spiegelkopf bzw. Innenrückblickspiegel einnimmt und so diesen nutzt.

Ebenfalls ist eine hängende Anordnung des Spiegelkopfs bzw. Innenrückblickspiegels am Spiegelfuß denkbar.

Das Spiegelglas ist bevorzugt als ein Keilglas bzw. als ein Keilspiegelglas ausgeführt.

Vorteile gegenüber dem Stand der Technik ergeben sich unter anderem durch eine einfachere, unkomplizierte elektrische Verbindung der elektrischen Komponenten der Innenrückblickspiegelanordnung. Die einfachere elektrische Verbindung ist unter Anderem dadurch bedingt, dass im günstigsten Fall keine, und im ungünstigsten Fall weit weniger elektrische Verbindungen über die gelenkige Verbindung zwischen Spiegelfuß und Spiegelkopfbzw. Innenrückblickspiegel hergestellt werden müssen, als beim Stand der Technik.

Weitere Vorteile gegenüber dem Stand der Technik ergeben sich beispielsweise bei einer in der Spiegelfußabdeckung zumindest zum Teil beherbergten Innenraumbeleuchtung und/oder ambienten Innenraumbeleuchtung und/oder Lesebeleuchtung. Die hierbei erzielten Vorteile sind unter Anderem dadurch bedingt, dass im Gegensatz zu einer Unterbringung im Spiegelkopf bzw. im Innenrückblickspiegel der Innenrückblickspiegelanordnung eine Ausleuchtung gleich bleibender Bereiche des Kraftfahrzeuginnenraums unabhängig von einer veränderlichen Verstelllage des Spiegelkopfs bzw. Innenrückblickspiegels erhalten wird und somit einen Baugruppe für den Einsatz in Recht-oder Linkslenkern erfolgen kann.

Ein zusätzlicher Vorteil gegenüber dem Stand der Technik ergibt sich durch wesentlich freiere Gestaltungsmöglichkeiten für den Spiegelkopf bzw. den Innenrückblickspiegel der Innenrückblickspiegelanordnung, da der Spiegelkopf leichter und eleganter gestaltet werden kann.

Ein anderer Vorteil ergibt sich durch eine bessere Nutzung des Kraftfahrzeuginnenraums. Dies ist unter Anderem dadurch bedingt, dass die Innenrückblickspiegelanordnung durch die Unterbringung zumindest eines erheblichen Teils der elektrischen Komponenten im Spiegelfuß den bislang völlig ungenutzten Raum hinter dem Spiegelkopf bzw. dem Innenrück-blickspiegel nutzt., wodurch der Spiegelkopf bzw. Innenrückblickspiegel selbst wesentlich kleiner und kompakter ausgeführt werden kann, was eine erhebliche Bauraumeinsparung nach sich zieht.

Ein wesentlicher Vorteil der Innenrückblickspiegelanordnung gegenüber dem Stand der Technik ergibt sich durch den Umstand, dass durch die Unterbringung zumindest eines erheblichen Teils der elektrischen Komponenten der Innenrückblickspiegelanordnung in der Spiegelfußabdeckung der Spiegelkopf bzw. Innenrückblickspiegel wesentlich leichter ist, als beim Stand der Technik. Dadurch wird die Flatter- bzw. Vibrationssteifigkeit der Verstelllage des Spiegelkopfes bzw. Innenrückblickspiegels erheblich verbessert. Darüber hinaus kann eine wesentlich leichtere gelenkige Verbindung einschließlich eines leichteren Spiegelfußes eingesetzt werden, was weit reichende Synergieeffekte betreffend das Gesamtgewicht des Kraftfahrzeugs und dessen Energieverbrauch nach sich zieht.

Ein weiterer Vorteil gegenüber dem Stand der Technik ergibt sich dadurch, dass ein oder mehrere in der Spiegelfußabdeckung zumindest zum Teil beherbergte Temperatur- und/oder Feuchtigkeitssensoren z.B. für die Regelung eines Abtauvorgangs der Windschutzscheibe sich im unmittelbaren Abströmbereich der Windschutzscheibe befinden. Dadurch wird eine besonders zuverlässige Regelung z.B. der Klimatisierung des Kraftfahrzeuginnenraums ermöglicht. Beim Stand der Technik, wo Temperatur- und/oder Feuchtigkeitssensoren im Spiegelkopf bzw. Innenrückblickspiegel untergebracht sind, befinden diese nicht unmittelbar im Abströmbereich der Windschutzscheibe, wodurch insbesondere bei einem Abtauvorgang einer z.B. von innen beschlagenen Windschutzscheibe keine zuverlässigen Aussagen über z.B. Luftfeuchtigkeit und/oder Temperatur der zunächst entlang der Windschutzscheibe strömenden und anschließend im Kraftfahrzeuginnenraum umgewälzten Luft erhalten werden.

Wichtig ist hervorzuheben, dass die Innenrückblickspiegelanordnung mit einer oder mehreren zumindest zum Teil von der Spiegelfußabdeckung beherbergten elektrischen Komponenten mit identischen Bauteilen sowohl für rechts-, als auch für linksgelenkte Kraftfahrzeuge auskommt. Dadurch wird der Montage- und Herstellungsaufwand erheblich vermindert und darüber hinaus die Gefahr einer fehlerhaften Montage durch Verwendung ähnlicher, aber falscher Bauteile verhindert. Dadurch können aufwändige und kostspielige Nacharbeiten sowie Ausschuss vermieden werden.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
Fig. 1 : ein erstes Ausführungsbeispiel einer erfindungsgemäßen Innenrückblickspiegelanordnung von der Seite her gesehen im Röntgenblick.
Fig. 2 : ein zweites Ausführungsbeispiel einer Innenrückblickspiegelanordnung von der Seite her gesehen im Röntgenblick.
Fig. 3 : ein weiteres Ausführungsbeispiel einer Innenrückblickspiegelanordnung von der Seite her gesehen.
Fig. 4 : ein weiteres Ausführungsbeispiel einer erfindungsgemäßen Innenrückblickspiegelanordnung von der Seite her gesehen.
Fig. 5 : ein weiteres Ausführungsbeispiel einer erfindungsgemäßen Innenrückblickspiegelanordnung zum Teil im Röntgenblick von der Seite her gesehen.
Fig. 6 : einen Querschnitt durch eine wenigstens eine elektrische Komponente beherbergende und einen Spiegelfuß verkleidende Spiegelfußabdeckung eines weiteren Ausführungsbeispiels einer erfindungsgemäßen Innenrückblickspiegelanordnung.

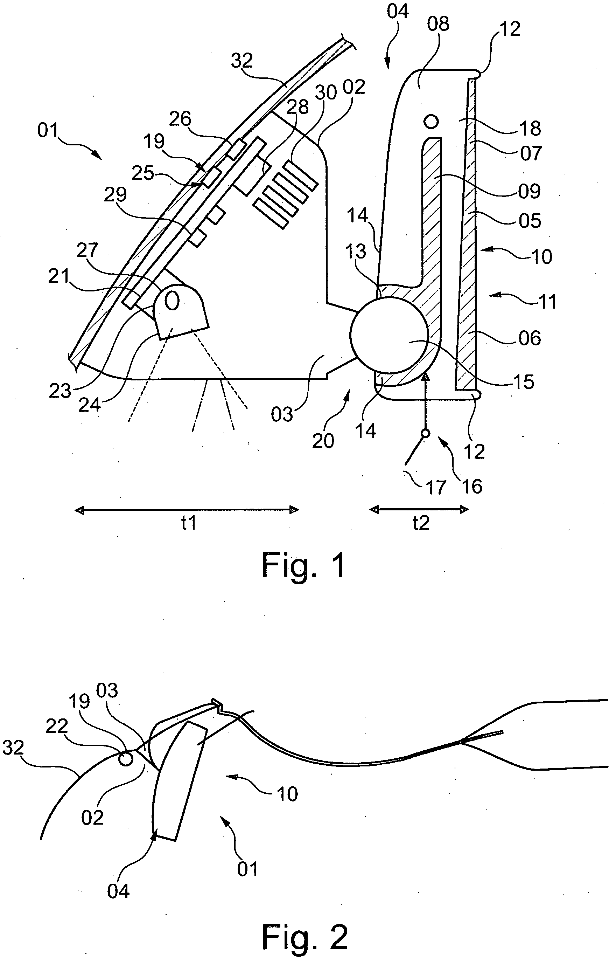

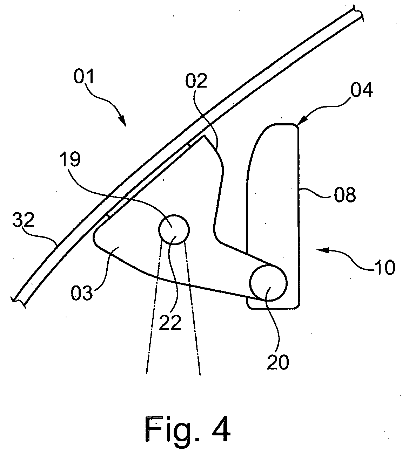

Eine in den Fig. 1 bis 6 ganz oder zum Teil dargestellte Innenrückblickspiegelanordnung 01 für Kraftfahrzeuge umfasst im Wesentlichen einen Spiegelfuß 03, eine Spiegelfußabdeckung 02, welche den Spiegelfuß 03 zumindest zum Teil verkleidet, sowie einen an dem Spiegelfuß 03 gelenkig angeordneten Spiegelkopf 04 bzw. Innenrückblickspiegel mit einem Spiegelglas 05. Der Spiegelfuß 03 wird als metallisches Bauteil ausgeführt oder besteht aus Kunststoff. Die Spiegelfußabdeckung 02 kann ein- oder mehrteilig ausgeführt sein und kann den metallischen Spiegelfuß umfassen. Ebenfalls ist denkbar, dass die Spiegelfußabdeckung 02 zumindest zum Teil den Spiegelfuß 03 umfasst oder zumindest zum Teil von diesem umfasst wird, beispielsweise durch eine Integrale Anformung z.B. eines Teils der Spiegelfußabdeckung 02 an den Spiegelfuß 03.

Das Spiegelglas 05 kann beispielsweise als ein Keilglas 06 bzw. als ein Keilspiegelglas ausgeführt sein. Alternativ oder zusätzlich kann das Spiegelglas 05 als ein mit unterschiedlichen Technologien abblendbares Spiegelglas 07 ausgeführt sein.

Der an dem Spiegelfuß 03 angeordnete, auch als Spiegelkopf 04 bezeichnete Innenrückblickspiegel der Innenrückblickspiegelanordnung 01 kann ein ein- oder mehrteiliges Innenrückblickspiegelgehäuse 08 umfassen, welches unter anderem einen dem Spiegelfuß 03 zugeordneten Grundträger 09 beherbergen, einen solchen umfassen, oder von einem solchen umfasst werden kann. Der Grundträger 09 stellt die mechanische Anbindung zwischen Spiegelfuß und Spiegelkopf her.

Das gegebenenfalls vorgesehene Innenrückblickspiegelgehäuse 08 weist auf seiner der Fahrtrichtung des Kraftfahrzeugs ab- und dem Fahrer des Kraftfahrzeugs zugewandten Vorderseite 10 eine Öffnung 11 auf, durch welche hindurch das Spiegelglas 05 sichtbar ist bzw. in welcher das Spiegelglas 05 angeordnet ist. Das Innenrückblickspiegelgehäuse 08 umgreift hierbei das Spiegelglas 05 an dessen Rändern 12 zumindest zum Teil derart, dass z.B. die Einhaltung gesetzlicher Vorgaben bezüglich vorgeschriebener Mindestradien an exponierten, Personen im Kraftfahrzeuginnenraum zugänglichen Stellen sichergestellt ist.

Zwischen Spiegelfuß 03 und Spiegelkopf 04 bzw. Innenrückblickspiegel befindet sich eine gelenkige Verbindung 20, so dass der Spiegelkopf 04 bzw.

Innenrückblickspiegel mit dem Spiegelglas 05 in einer gewünschten, vom Fahrer des Kraftfahrzeugs individuell einstellbaren Verstelllage gegenüber dem Spiegelfuß 03 einstellbar ist. Die gelenkige Verbindung 20 kann dabei zwischen dem Spiegelfuß 03 und einem gegebenenfalls vorgesehenen Grundträger 09 vorgesehen sein. Beispielsweise weist der Spiegelfuß 03 ein Kugelgelenk 15 auf oder ein andersartiges, geeignetes Gelenk, vorzugsweise jedoch ein Reiblager. Das Reiblager dämpft durch aneinander anliegende und gegeneinander reibende erste und zweite Flächenabschnitte, Bewegungen des Spiegelkopfs 04 bzw. Innenrückblickspiegels gegenüber dem Spiegelfuß 03, wodurch ein unerwünschtes Vibrieren bzw. Flattern des Spiegelkopfs 04 bzw. Innenrückblickspiegels beispielsweise während der Fahrt des Kraftfahrzeugs weitestgehend unterbunden wird.

Die gelenkige Verbindung 20 kann für eine gegebenenfalls vorgesehene elektromotorische Verstellung der Verstelllage des Spiegelkopfs 04 bzw. Innenrückblickspiegels einen elektromotorischen Verstellantrieb umfassen. Hierbei kann ein Speicher für mindestens eine individuelle Verstelllage vorgesehen sein, welche durch Abrufen des Speichers wiederholbar genau eingestellt werden kann.

Die Innenrückblickspiegelanordnung 01 kann einen Abklappmechanismus 16 umfassen, vermittels dem der Spiegelkopf 04 bzw. der Innenrückblickspiegel durch Betätigung einer Bedieneinrichtung 17, wie etwa eines Kipphebels, um einen definierten Schwenkwinkel aus einer Betriebsstellung beispielsweise um eine im Wesentlichen horizontale Achse der gelenkigen Verbindung 20 in eine Abklappstellung und umgekehrt verschwenkt werden kann, um eine Blendung durch rückwärtige Lichtquellen in der Abklappstellung abzumindern.

Alternativ oder zusätzlich kann zur Vermeidung einer Blendung durch rückwärtige Lichtquellen eine bereits erwähnte automatische Abblendung des Spiegelglases 05 vorgesehen sein. Das hierzu erforderliche, gegebenenfalls vorgesehene abblendbare Spiegelglas 07 bildet eine notwendigerweise im Spiegelkopf 04 bzw. Innenrückblickspiegel untergebrachte elektrische Komponente 18 der Innenrückblickspiegelanordnung 01.

Den in den Zeichnungen ganz oder zum Teil dargestellten Innenrückblickspiegelanordnungen 01 ist gemein, dass sie wenigstens eine elektrische Komponente 19 aufweisen, welche zumindest zum Teil von der Spiegelfußabdeckung 02 beherbergt ist.

Weist eine Innenrückblickspiegelanordnung 01 beispielsweise ein zuvor erwähntes automatisch abblendbares Spiegelglas 07 auf, so ist eine für das elektrochromatisch abblendbare Spiegelglas 07 benötigte Steuerschaltung 21 vorzugsweise in der Spiegelfußabdeckung 02 untergebracht, jedoch keinesfalls im Spiegelkopf 04 bzw. Innenrückblickspiegel.

Die für ein gegebenenfalls vorgesehenes automatisch abblendbares Spiegelglas 07 benötigte Steuerschaltung 21 bildet somit besonders bevorzugt eine zumindest zum Teil von der Spiegelfußabdeckung 02 beherbergte elektrische Komponente 19.

Weitere gegebenenfalls alternativ oder zusätzlich vorgesehene und zumindest zum Teil von der Spiegelfußabdeckung 02 beherbergte elektrische Komponenten 19 der Innenrückblickspiegelanordnung 01 können beispielsweise:
- mindestens eine zur Steuerung eines automatischen Wischens einer Windschutzscheibe 32 eines Kraftfahrzeugs vorgesehene Regensensoranordnung 25, und/oder
- mindestens eine beispielsweise vermittels eines z.B. vertikal und/oder diffus nach unten abstrahlenden Leuchtmittels mit vorzugsweise wenigstens einer lichtemittierenden Diode und/oder eines lichtemittierenden Dioden-Chips, beides vereinfacht unter dem Begriff LED 27 zusammengefasst, verwirklichte ambiente Innenraumbeleuchtung 22, und/oder
- mindestens eine beispielsweise vermittels eines z.B. multidirektional und/oder diffus im Wesentlichen nach unten abstrahlenden Leuchtmittels mit vorzugsweise einer oder mehreren LEDs 27 verwirklichte Innenraumbeleuchtung, und/oder
- mindestens eine beispielsweise vermittels eines Leuchtmittels, das eine oder mehrere vorzugsweise in einem Brennpunkt eines Reflektors 23 angeordnete LEDs 27 umfasst und gerichtet im Wesentlichen nach unten abstrahlt verwirklichte Lesebeleuchtung 24, und/oder
- mindestens eine Sendeeinrichtung 26 zur Fernbetätigung wenigstens eines elektrischen Torantriebs, und/oder
- mindestens eine Mikrofonanordnung beispielsweise für eine Freisprecheinrichtung eines integrierten Telefonsystems und/oder zur Erfassung von Sprachbefehlen und/oder zur Stimmenerkennung, und/oder
- mindestens einer Lautsprecheranordnung beispielsweise für eine Kraftfahrzeuginnenraumbeschallung, und/oder;
- wenigstens eine Temperatur und/oder Feuchtigkeitssensoranordnung 28 z.B. zur Steuerung und Regelung einer Klimatisierung des Kraftfahrzeuginnenraums, und/oder
- eine Kameraanordnung, und/oder
- ein z.B. mit Sende und/oder Empfangseinrichtungen ausgestattetes Mautsystem, und/oder
- mindestens eine Anzeigeeinrichtung,
sein.

Dabei zählen gegebenenfalls für die jeweiligen Einrichtungen erforderliche, beispielsweise auf einem oder mehreren einzelnen oder gemeinsamen Schaltungsträgern 29 untergebrachte und durch elektrische und/oder elektronische Bauteile verwirklichte Steuerschaltungen ebenfalls zu den jeweiligen zumindest zum Teil von der Spiegelfußabdeckung 02 beherbergten elektrischen Komponenten 19.

Beispielsweise die vermittels LEDs 27 als Lichtquellen verwirklichten Leuchtmittels der Beleuchtungen weisen neben den LEDs 27 noch weitere z.B. auf einem oder mehreren gemeinsamen oder getrennten Schaltungsträgern 29 untergebrachten, zu deren Betrieb erforderliche elektrische und/oder elektronische Bauteile auf. Diese Schaltungsträger 29 mitsamt den darauf angeordneten elektrischen und/oder elektronischen Bauteilen bilden dabei jeweils für sich genommen oder gemeinsam wenigstens eine zumindest zum Teil von der Spiegelfußabdeckung 02 beherbergte elektrische Komponente 19.

Die Spiegelfußabdeckung 02 kann mit mindestens einer beispielsweise schlitzförmigen Öffnung 30 zum Kraftfahrzeuginnenraum hin versehen sein. Diese kann dazu dienen, damit beispielsweise ein oder mehrere Sensoren einer gegebenenfalls vorgesehenen Temperatur und/oder Feuchtigkeitssensoranordnung 28 kommunizierend mit dem Kraftfahrzeuginnenraum in Verbindung stehen. Durch die typischerweise unmittelbar im Abströmbereich der Windschutzscheibe 32 angeordnete Innenrückblickspiegelanordnung 01 und insbesondere durch die Anordnung der Temperatur und/oder Feuchtigkeitssensoranordnung 28 in der Spiegelfußabdeckung 02 kann beispielsweise ein Abtauvorgang beispielsweise zur Befreiung der Windschutzscheibe 32 von einem Beschlag auf deren Innenseite besonders gut gesteuert werden. Alternativ oder zusätzlich kann die mindestens eine Öffnung 30 zumindest teilweise einem in der Spiegelfußabdeckung 02 beherbergten Mikrofon einer Mikrofonanordnung und/oder mindestens einem Lautsprecher einer Lautsprecheranordnung zugeordnet sein.

Um den ungenutzten Raum hinter dem Spiegelkopf 04 bzw. Innenrückblickspiegel zu nutzen, ist erfindungsgemäß die wenigstens eine zumindest zum Teil von der Spiegelfußabdeckung 02 beherbergte elektrische Komponente 19 in Blickrichtung zumindest eines Fahrers eines Kraftfahrzeugs, sowie besonders bevorzugt auch dessen Beifahrers, hinter dem Spiegelkopf 04 bzw. Innenrückblickspiegel angeordnet. Die Bautiefe t1 der Spiegelfußabdeckung 02 übersteigt dabei die Bautiefe t2 der Spiegelkopfes. Die Bautiefe eines erfindungsgemäßen Innenrückblickspiegels kann dabei mehrere Zentimeter betragen, je nach Winkel der Windschutzscheibe sind Bautiefen von 5 bis 15 cm möglich, aber auch noch größere Werte.

Ist beispielsweise kein automatisch abblendbares Spiegelglas 07 vorgesehen, ist der Spiegelkopf 04 bzw. Innenrückblickspiegel der Innenrückblickspiegelanordnung 01 vorzugsweise frei von im Spiegelkopf 04 bzw. Innenrückblickspiegel untergebrachten elektrischen Komponenten 18.

Sofern die Innenrückblickspiegelanordnung 01 überhaupt im Spiegelkopf 04 bzw. Innenrückblickspiegel untergebrachte elektrische Komponenten 18 aufweist, handelt es sich hierbei vorzugsweise ausschließlich um einen oder mehrere Bedientaster und/oder -schalter und/oder -knöpfe, und/oder eine oder mehrere z.B. in das Spiegelglas 05 integrierte Anzeige-Vorrichtungen und/oder um ein elektrochromatisch abblendbares Spiegelglas. Dabei können ein oder mehrere Bedientaster und/oder -Schalter und/oder -knöpfe beispielsweise vorgesehen sein, um eine oder mehrere Einrichtungen Ein- und Auszuschalten, wie beispielsweise eine von der Spiegelfußabdeckung beherbergte und vorzugsweise außerhalb des direkten Blickfelds des Fahrers angeordnete Innenraumbeleuchtung und/oder Lesebeleuchtung. Darüber hinaus können ein oder mehrere Bedientaster und/oder -schalter und/oder -knöpfe für eine Betätigung einer gegebenenfalls im Spiegelkopf 04 bzw. Innenrückblickspiegel untergebrachten Anzeigevorrichtung vorgesehen sein, beispielsweise um diese ein- und/oder auszuschalten und/oder umzuschalten. Ebenfalls können ein oder mehrere Bedientaster und/oder -schalter und/oder -knöpfe für eine Betätigung einer von der Spiegelfußabdeckung 02 beherbergten, eine durch die Windschutzscheibe hindurch sichtbaren Anzeigeeinrichtung eines Mautsystems vorgesehen sein, beispielsweise um diese ein- und/oder auszuschalten und/oder umzuschalten.

Der Spiegelfuß 03 der Innenrückblickspiegelanordnung ist zur Anordnung an der Innenseite einer Windschutzscheibe 32 vorgesehen. Dabei kann die Spiegelfußabdeckung 02 mindestens eine Öffnung zur Windschutzscheibe 32 hin aufweisen, durch welche Öffnung beispielsweise die vorgesehene Anzeigeeinrichtung des Mautsystems durch die Windschutzscheibe 32 hindurch von außen sichtbar sein kann.

Der Spiegelfuß 03 kann wie in den Fig. 1 beispielhaft dargestellt im Wesentlichen horizontal in den Kraftfahrzeuginnenraum ragen.

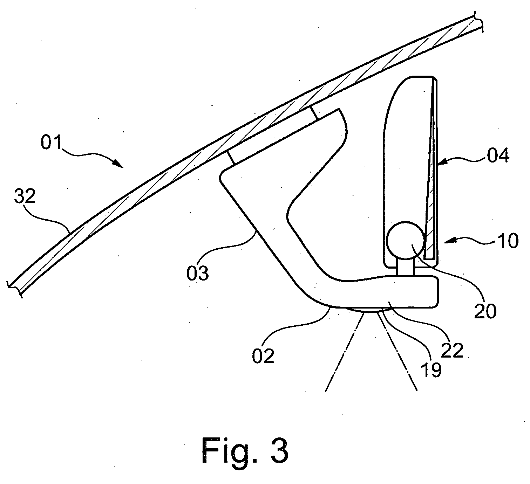

Weitere Besonderheiten der Anordnung des Spiegelkopfes 04 bzw. Innenrückblickspiegels am Spiegelfuß 03 sind in Fig. 3 dargestellt. Dort ist der Spiegelkopf 04 bzw. der Innenrückblickspiegel stehend auf einem z.B. haken- bzw. J-förmigen Spiegelfuß 03 angeordnet. Bei dieser Anordnung kann eine beispielsweise ambiente Innenraumbeleuchtung 22 unterhalb der den Spiegelkopf 04 bzw. Innenrückblickspiegel tragenden Partie des Spiegelfußes 03 zumindest teilweise in der Spiegelfußabdeckung 02 beherbergt sein.

Wie aus den Figuren 1, 4, 5 und 6 ersichtlich, ist der Spiegelkopf 04 bzw. der Innenrückblickspiegel aus einer Blickrichtung eines Fahrers eines Kraftfahrzeugs dem Spiegelfuß 03 vorgesetzt.

Eine als Kipphebel ausgeführte Bedieneinrichtung 17 ist beispielhaft am Spiegelkopf 04 bzw. Innenrückblickspiegel angeordnet.

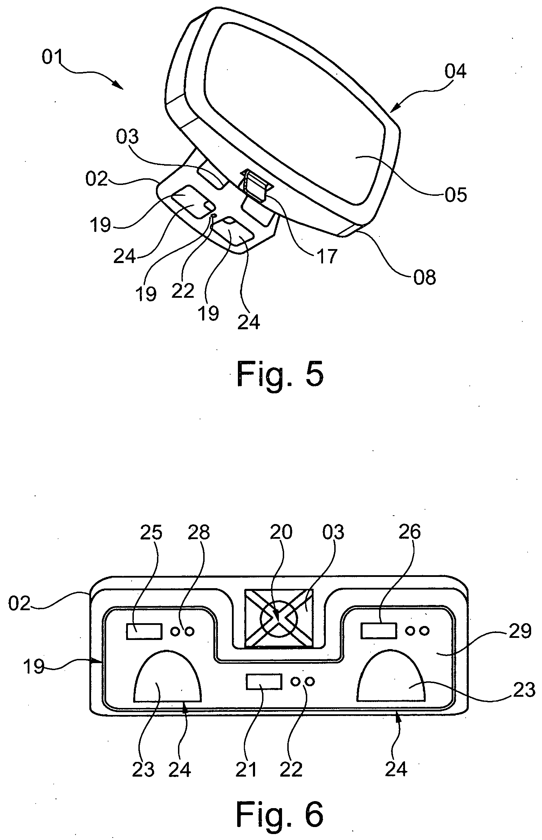

Die wenigstens einen Teil der zumindest zum Teil von der Spiegelfußabdeckung 02 beherbergten elektrischen Komponenten 19 bildenden Steuerschaltungen können wie in Fig. 6 dargestellt auf einem gemeinsamen Schaltungsträger 29 untergebracht sein, welcher sich unter Freilassung des Spiegelfußes 03 beispielsweise quer zur Fahrtrichtung des Kraftfahrzeugs in der Spiegelfußabdeckung 02 erstreckt.

Alternativ können die wenigstens einen Teil der zumindest zum Teil von der Spiegelfußabdeckung 02 beherbergten elektrischen Komponenten 19 bildenden Steuerschaltungen auf mehreren Schaltungsträgern 29 untergebracht sein, welcher sich unter Freilassung des Spiegelfußes 03 sowie einer gegebenenfalls vorgesehenen Innenraum- und/oder Lesebeleuchtung 24 beispielsweise längs der Fahrtrichtung des Kraftfahrzeugs in der Spiegelfußabdeckung 02 erstrecken.

Als Schaltungsträger 29 eignen sich beispielsweise gedruckte Schaltungsträger (PCB; Printed Circuit Board) ebenso wie z.B. spritzgegossene Schaltungsträger (MID; Molded lnterconnect Devices). Letztere können beispielsweise wenigstens einen Teil der Spiegelfußabdeckung 02 bilden oder von dieser umfasst werden.

Die Erfindung ist insbesondere im Bereich der Herstellung von Innenrückblickspiegelanordnungen für Kraftfahrzeuge gewerblich anwendbar.

### Bezugszeichenliste

- 01 :: Innenrückblickspiegelanordnung
- 02 :: Spiegelfußabdeckung
- 03 :: Spiegelfuß
- 04 :: Spiegel kopf
- 05 :: Spiegelglas
- 06 :: Keilglas
- 07 :: elektrochromatisch abblendbares Spiegelglas
- 08 :: Innenrückblickspiegelgehäuse
- 09 :: Grundträger
- 10 :: Vorderseite
- 11 :: Öffnung
- 12 :: Rand
- 13 :: erste Partie
- 14 :: zweite Partie
- 15 :: Kugelgelenk
- 16 :: Abklappmechanismus
- 17 :: Bedieneinrichtung
- 18 :: im Spiegelkopf untergebrachte elektrische Komponente
- 19 :: zumindest zum Teil von der Spiegelfußabdeckung beherbergte elektrische Komponente
- 20 :: gelenkige Verbindung
- 21 :: Steuerschaltung
- 22 :: ambiente Innenraumbeleuchtung
- 23 :: Reflektor
- 24 :: Lesebeleuchtung
- 25 :: Regensensoranordnung
- 26 :: Sendeeinrichtung
- 27 :: LED
- 28 :: Temperatur und/oder Feuchtigkeitssensoranordnung
- 29 :: Schaltungsträger
- 30 :: Öffnung in der Spiegelfußabdeckung zum Kraftfahrzeuginnenraum hin
- 31:: Arm
- 32 :: Windschutzscheibe

## Patentansprüche

1. Innenrückblickspiegelanordnung (01) für Kraftfahrzeuge, welche einen vermittels einer Spiegelfußabdeckung (02) zumindest zum Teil verkleideten Spiegelfuß (03) sowie einen daran gelenkig angeordneten Spiegelkopf (04) bzw. Innenrückblickspiegel mit einem Spiegelglas (05, 06, 07) aufweist,
mit einer im Verhältnis zur Bautiefe (t1) der Spiegelfußabdeckung (02) geringeren Bautiefe (t2) des Spiegelkopfes (04), wobei die Spiegelfußabdeckung (02) wenigstens eine elektrische Komponente (19) umfasst und wobei der Spiegelfuß (03) zur Anordnung an der Innenseite einer Windschutzscheibe (32) vorgesehen ist, wobei
der Spiegelkopf (04) bzw. der Innenrückblickspiegel dem Spiegelfuß (03) aus einer Blickrichtung eines Fahrers des Kraftfahrzeugs so vorgesetzt ist, dass der Spiegelfuß den verbleibenden Raum hinter dem Spiegelkopf beziehungsweise dem Innenrückspiegel einnimmt, und wobei die wenigstens eine elektrische Komponente (19) in der Spiegelfußabdeckung (02) eine Innenraumbeleuchtung (22) ist **dadurch gekennzeichnet, dass** die Innenraumbeleuchtung (22) unterhalb einer den Spiegelkopf (04) tragenden Partie des Spiegelfußes (03) zumindest teilweise in der Spiegelfußabdeckung (02) beherbergt ist, wobei die Spiegelfußabdeckung (02) eine durch die Windschutzscheibe (32) hindurch sichtbare Anzeigeeinrichtung eines Mautsystems beherbergt.

2. Innenrückblickspiegelanordnung nach Anspruch 1,
**dadurch gekennzeichnet,**
**dass** die elektrische Komponente (19) in Blickrichtung zumindest eines Fahrers eines Kraftfahrzeugs hinter dem Spiegelkopf (04) bzw. Innenrückblickspiegel angeordnet ist.

3. Innenrückblickspiegelanordnung nach Anspruch 1 oder 2,
**gekennzeichnet durch**
wenigstens eine zumindest zum Teil von der Spiegelfußabdeckung (02) beherbergte elektrische Komponente (19) aus der Gruppe:
- Regensensoranordnung;
- Antennen, GPS, Mobilfunk, Radar
- ambiente Innenraumbeleuchtung;
- Innenraumbeleuchtung;
- Lesebeleuchtung;
- Sendeeinrichtung für einen elektrischen Torantrieb, wie beispielsweise einen Garagentoröffner;
- Mikrofonanordnung;
- Lautsprecheranordnung;
- Steuerschaltung für elektrochromatisch abblendbares Spiegelglas;
- Temperatur und/oder Feuchtigkeitssensoranordnung, z.B. zur Regelung eines Abtauvorgangs der Windschutzscheibe;
- Kameraanordnung, z.B. für Fahrerassistenzvorrichtungen und -systeme, wie z.B. zur Spurverlasswarnung, Fahrspurerkennung, Kollisions- bzw. Annäherungswarnung;
- Mautsystem;
- Anzeigeeinrichtung
- Regen-, Temperatur- und Luftfeuchtesensoren
- Schalter

4. Innenrückblickspiegelanordnung nach Anspruch 1, 2 oder 3,
**dadurch gekennzeichnet,**
**dass** der Spiegelkopf (04) bzw. Innenrückblickspiegel frei von elektrischen Komponenten (18) ist.

5. Innenrückblickspiegelanordnung nach einem der Ansprüche 1, 2 oder 3,
**dadurch gekennzeichnet,**
**dass** der Spiegelkopf (04) bzw. Innenrückblickspiegel mit Ausnahme wenigstens einer elektrischen Komponente (18) aus der Gruppe:
- Bedientaster und/oder -schalter und/oder -knopf;
- Anzeigevorrichtung;
- elektrochromatisch abblendbares Spiegelglas (07);
frei von elektrischen Komponenten ist.

6. Innenrückblickspiegelanordnung nach einem der vorhergehenden Ansprüche,
**dadurch gekennzeichnet,**
**dass** der Spiegelfuß (03) im Wesentlichen horizontal in den Kraftfahrzeuginnenraum ragt.

7. Innenrückblickspiegelanordnung nach einem der vorhergehenden Ansprüche,
**dadurch gekennzeichnet,**
**dass** der Spiegelkopf (04) bzw. der Innenrückblickspiegel auf dem Spiegelfuß (03) stehend angeordnet ist.

8. Innenrückblickspiegelanordnung nach einem der vorhergehenden Ansprüche,
**dadurch gekennzeichnet,**
**dass** der Spiegelkopf (04) bzw. der Innenrückblickspiegel aus einer Blickrichtung eines Fahrers eines Kraftfahrzeugs dem Spiegelfuß (03) vorgesetzt ist.

9. Innenrückblickspiegelanordnung nach einem der Anspruche 1-6 oder 8,
**gekennzeichnet durch**
eine hängende Anordnung des Spiegelkopfs (04) bzw. Innenrückblickspiegels am Spiegelfuß (03).

10. Innenrückblickspiegelanordnung nach einem der vorhergehenden Ansprüche,
**dadurch gekennzeichnet,**
**dass** das Spiegelglas (05) ein Keilglas (06) bzw. Keilspiegelglas umfasst.

11. Innenrückblickspiegelanordnung nach einem der vorhergehenden Ansprüche,
**gekennzeichnet durch**
einen Abklappmechanismus (16), vermittels dem der Spiegelkopf (04) bzw. der Innenrückblickspiegel **durch** Betätigung einer Bedieneinrichtung (17) um einen definierten Schwenkwinkel aus einer Betriebsstellung in eine Abklappstellung und umgekehrt verschwenkt werden kann.

12. Innenrückblickspiegelanordnung nach Anspruch 11,
**gekennzeichnet durch**
eine Beleuchtungseinrichtung für die Bedieneinrichtung (17) des Abklappmechanismus (16).

## Claims

1. An internal rearview mirror arrangement (01) for motor vehicles, which comprises a mirror base (03) which is at least partially covered by means of a mirror base cover (02) as well as a mirror head (04) or internal rearview mirror arranged thereon in an articulated manner having a mirror glass (05, 06, 07), with a lower overall depth (t2) of the mirror head (04) relative to the overall depth (t1) of the mirror base cover (02), wherein the mirror base cover (02) comprises at least one electrical component (19) and wherein the mirror base (03) is provided for arrangement on the inside of a windshield (32), wherein
the mirror head (04) or the internal rearview mirror is placed in front of the mirror base (03) from a viewing direction of a driver of the motor vehicle, such that the mirror base occupies the remaining space behind the mirror head or the internal rearview mirror, and wherein the at least one electrical component (19) in the mirror base cover (02) is an interior lighting (22)
**characterized in that** the interior lighting (22) is at least partially housed in the mirror base cover (02) below a part of the mirror base (03) supporting the mirror head (04), wherein the mirror base cover (02) houses a display device of a toll system which is visible through the windshield (32).

2. The internal rearview mirror arrangement according to Claim 1,
**characterized in that**
the electrical component (19) is arranged in the viewing direction of at least one driver of a motor vehicle behind the mirror head (04) or internal rearview mirror.

3. The internal rearview mirror arrangement according to Claim 1 or 2,
**characterized by**
at least one electrical component (19), which is at least partially housed by the mirror base cover (02), of the group:
- rain sensor arrangement;
- antennas, GPS, mobile communications, radar
- ambient interior lighting;
- interior lighting;
- reading lighting;
- transmitting device for an electrical door drive such as, for example, a garage door opener;
- microphone arrangement;
- loudspeaker arrangement;
- control circuit for electrochromatically dimmable mirror glass;
- temperature and/or moisture sensor arrangement, e.g. for controlling a defrosting process of the windshield;
- camera arrangement, e.g. for driver assistance devices and systems such as e.g. lane departure warning, traffic lane detection, collision or approach warning;
- toll system;
- display device
- rain, temperature and air humidity sensors
- switch.

4. The internal rearview mirror arrangement according to Claim 1, 2 or 3,
**characterized in that**
the mirror head (04) or internal rearview mirror is free of electrical components (18).

5. The internal rearview mirror arrangement according to any one of Claims 1, 2 or 3,
**characterized in that**
the mirror head (04) or internal rearview mirror, with the exception of at least one electrical component (18) of the group:
- control key and/or switch and/or knob;
- display device;
- electrochromatically dimmable mirror glass (07);
is free of electrical components.

6. The internal rearview mirror arrangement according to any one of the preceding claims,
**characterized in that**
the mirror base (03) substantially projects horizontally into the motor vehicle interior.

7. The internal rearview mirror arrangement according to any one of the preceding claims,
**characterized in that**
the mirror head (04) or the internal rearview mirror is arranged upright on the mirror base (03).

8. The internal rearview mirror arrangement according to any one of the preceding claims, **characterized in that**
the mirror head (04) or the internal rearview mirror is placed in front of the mirror base (03) from a viewing direction of a driver of a motor vehicle.

9. The internal rearview mirror arrangement according to any one of Claims 1-6 or 8
**characterized by**
a suspended arrangement of the mirror head (04) or internal rearview mirror on the mirror base (03).

10. The internal rearview mirror arrangement according to any one of the preceding claims,
**characterized in that**
the mirror glass (05) comprises a wedge glass (06) or wedge mirror glass.

11. The internal rearview mirror arrangement according to any one of the preceding claims, **characterized by**
a folding down mechanism (16), by means of which the mirror head (04) or the internal rearview mirror can be swiveled about a defined swivel angle from an operating position into a folding down position and vice versa by actuating a operating device (17).

12. The internal rearview mirror arrangement according to Claim 11,
**characterized by**
a lighting device for the operating device (17) of the folding down mechanism (16).

## Revendications

1. Agencement de rétroviseur intérieur (01) pour véhicules automobiles, comprenant une base de rétroviseur (03) au moins partiellement habillée d'un recouvrement de base de rétroviseur (02) ainsi qu'une tête de rétroviseur (04) ou plutôt un rétroviseur intérieur agencée de manière articulée de celle-ci ayant un miroir de rétroviseur (05, 06, 07), avec une épaisseur (t2) de la tête de rétroviseur (04) étant inférieure par rapport à une épaisseur (t1) du recouvrement de base de rétroviseur (02), dans lequel le recouvrement de base de rétroviseur (02) comprend au moins un composant électrique (19), et dans lequel le recouvrement de base de rétroviseur (02) est prévue pour être agencée sur le côté intérieur du pare-brise (32), dans lequel
la tête de rétroviseur (04), ou plutôt le rétroviseur intérieur est disposée devant la base de rétroviseur (03) dans une direction de vision d'un conducteur du véhicule automobile, de telle sorte que la base de rétroviseur occupe l'espace restant derrière la tête de rétroviseur, ou plutôt le rétroviseur intérieur, et dans lequel le au moins un composant électrique (19) dans le recouvrement de base de rétroviseur (02) est un éclairage intérieur (22), **caractérisé en ce que** l'éclairage intérieur (22) est reçu sous une partie de la base de rétroviseur (03) supportant la tête de rétroviseur (04) au moins partiellement dans le recouvrement de base de rétroviseur (02), dans lequel le recouvrement de base de rétroviseur (02) reçoit un dispositif d'affichage d'un système de péage pouvant être vu à travers le pare-brise (32).

2. Agencement de rétroviseur intérieur selon la revendication 1, caractérisé ce que
le composant électrique (19) est agencé dans la direction de vision d'au moins un conducteur d'un véhicule automobile derrière la tête de rétroviseur (04) ou le rétroviseur intérieur.

3. Agencement de rétroviseur intérieur selon la revendication 1 ou 2, **caractérisé par**
au moins un composant électrique (19) reçu au moins en partie par le recouvrement de base de rétroviseur (02), choisi dans le groupe comprenant :
- un agencement de détection de pluie ;
- des antennes, GPS, téléphone mobile, radar ;
- un éclairage intérieur ambiant ;
- un éclairage intérieur ;
- un éclairage de lecture ;
- un dispositif émetteur pour un entraînement électrique de porte, comme par exemple un ouvre-porte de garage ;
- un agencement de microphone ;
- un agencement de haut-parleurs ;
- un circuit de commande pour un verre de miroir anti-éblouissement électrochromatique ;
- un agencement de détection de température et/ou d'humidité, par exemple pour commander un dégivrage du pare-brise ;
- un agencement de caméra, par exemple pour les dispositifs et les systèmes d'assistance au conducteur, comme par exemple une alerte de sortie de trajectoire, une identification de voie, une alerte de collision ou de rapprochement ;
- un système de péage ;
- un dispositif d'affichage ;
- des capteurs de pluie, de température et d'humidité de l'air ;
- un interrupteur.

4. Agencement de rétroviseur intérieur selon la revendication 1, 2 ou 3, caractérisé ce que
la tête de rétroviseur (04), ou plutôt le rétroviseur intérieur, est exempte de composant électrique (18).

5. Agencement de rétroviseur intérieur selon la revendication 1, 2 ou 3, caractérisé ce que
la tête de rétroviseur (04), ou plutôt le rétroviseur intérieur, est exempte des composants électriques, à l'exception de au moins un de composant électrique (18) du groupe :
un bouton-poussoir et/ou un interrupteur et/ou un bouton ;
un dispositif d'affichage ;
un verre de miroir anti-éblouissement électrochromatique.

6. Agencement de rétroviseur intérieur selon l'une quelconque des revendications précédentes, **caractérisé en ce que**
la base de rétroviseur (03) fait saillie sensiblement à l'horizontale dans l'habitacle du véhicule automobile.

7. Agencement de rétroviseur intérieur selon l'une quelconque des revendications précédentes, **caractérisé en ce que**
la tête de rétroviseur (04), ou plutôt le rétroviseur intérieur, est agencée debout sur la base de rétroviseur (03).

8. Agencement de rétroviseur intérieur selon l'une quelconque des revendications précédentes, **caractérisé en ce que**
la tête de rétroviseur (04), ou plutôt le rétroviseur intérieur est disposée en dehors de la base de rétroviseur (03) d'un direction de vision d'un conducteur d'un véhicule automobile.

9. Agencement de rétroviseur intérieur selon l'une quelconque des revendications 1 à 6 ou 8, **caractérisé par**
un agencement suspendu de la tête de rétroviseur (04), ou plutôt du rétroviseur intérieur, au niveau de la base de rétroviseur (03).

10. Agencement de rétroviseur intérieur selon l'une quelconque des revendications précédentes, **caractérisé en ce que**
le verre de miroir (05) comprend un verre de coin (06), ou plutôt un verre de miroir de coin.

11. Agencement de rétroviseur intérieur selon l'une quelconque des revendications précédentes, **caractérisé par**
un mécanisme de rabattement (16), au moyen duquel la tête de rétroviseur (04), ou plutôt le rétroviseur intérieur, par l'utilisation d'un dispositif d'actionnement (17), peut être pivotée sur un angle de pivotement défini à partir d'une position de fonctionnement jusque dans une position rabattue, et réciproquement.

12. Agencement de rétroviseur intérieur selon la revendication 11, **caractérisé par**
un dispositif d'éclairage pour le dispositif d'actionnement (17) du mécanisme de rabattement (16).
